(19) **Europäisches Patentamt / European Patent Office / Office européen des brevets**

(11) **EP 3 555 659 B1**

(12) **FASCICULE DE BREVET EUROPEEN**

(45) Date de publication et mention de la délivrance du brevet:
**27.01.2021 Bulletin 2021/04**

(21) Numéro de dépôt: **17821679.2**

(22) Date de dépôt: **05.12.2017**

(51) Int Cl.:
*G01S 15/89* [(2006.01)] *G01N 29/36* [(2006.01)]
*G01S 7/52* [(2006.01)] *G01N 29/44* [(2006.01)]
*G01N 29/26* [(2006.01)]

(86) Numéro de dépôt international:
**PCT/FR2017/053390**

(87) Numéro de publication internationale:
**WO 2018/109313 (21.06.2018 Gazette 2018/25)**

(54) **PROCEDE D'ACQUISITION DE SIGNAUX PAR SONDAGE ULTRASONORE, PROGRAMME D'ORDINATEUR ET DISPOSITIF DE SONDAGE A ULTRASONS CORRESPONDANTS**

VERFAHREN ZUR ERFASSUNG VON ULTRASCHALLPRÜFSIGNALEN SOWIE ENTSPRECHENDES COMPUTERPROGRAMM UND ULTRASCHALLPRÜFVORRICHTUNG

METHOD OF ACQUIRING ULTRASONIC TESTING SIGNALS, AND CORRESPONDING COMPUTER PROGRAM AND ULTRASONIC TESTING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.12.2016 FR 1662523**

(43) Date de publication de la demande:
**23.10.2019 Bulletin 2019/43**

(73) Titulaires:
• **Commissariat à l'Énergie Atomique et aux Énergies Alternatives**
**75015 Paris (FR)**
• **Centre National de la Recherche Scientifique**
**75794 Paris Cedex 16 (FR)**

(72) Inventeurs:
• **LOPEZ VILLAVERDE, Eduardo-Rigoberto**
**91300 Massy (FR)**
• **ROBERT, Sébastien**
**94270 Le Kremlin-Bicêtre (FR)**
• **PRADA JULIA, Claire**
**75006 Paris (FR)**

(74) Mandataire: **Bonnet, Michel**
**Cabinet Bonnet**
**93, rue Réaumur**
**75002 Paris (FR)**

(56) Documents cités:
**US-A1- 2016 065 323**

• **VILLAVERDE EDUARDO LOPEZ ET AL: "Ultrasonic imaging in highly attenuating materials with Walsh-Hadamard codes and the decomposition of the time reversal operator", 2016 IEEE INTERNATIONAL ULTRASONICS SYMPOSIUM (IUS), IEEE, 18 septembre 2016 (2016-09-18), pages 1-4, XP032988626, DOI: 10.1109/ULTSYM.2016.7728744 cité dans la demande**
• **GRAN F ET AL: "Spatial encoding using a code division technique for fast ultrasound imaging", IEEE TRANSACTIONS ON ULTRASONICS, FERROELECTRICS AND FREQUENCY CONTROL, IEEE, US, vol. 52, no. 1, 1 janvier 2008 (2008-01-01), pages 12-23, XP011204459, ISSN: 0885-3010**

**Description**

La présente invention concerne un procédé d'acquisition de signaux par sondage ultrasonore, par exemple pour réaliser de l'imagerie ou de la focalisation adaptative et sélective. Elle concerne également un programme d'ordinateur et un dispositif de sondage à ultrasons correspondants.

L'invention s'applique en particulier au domaine du contrôle non destructif par ultrasons, dans lequel l'acquisition de signaux ultrasonores permet de détecter et/ou visualiser des défauts dans des structures, mais elle peut aussi s'appliquer à tout type de détection ou imagerie échographique ultrasonore, notamment au domaine médical pour l'inspection de zones d'intérêt dans le corps humain ou animal.

Elle porte plus particulièrement sur un procédé d'acquisition de signaux ultrasonores opérant de la façon suivante :

- commande de L transducteurs d'émission pour M émissions successives d'ondes ultrasonores vers une zone d'intérêt,
- commande de N transducteurs de réception de manière à recevoir simultanément et pendant une durée prédéterminée, pour chacune des M émissions successives, N signaux de mesure, mesurant en particulier des échos dus à des réflexions de l'émission considérée dans la zone d'intérêt,
- obtention d'une matrice [MR(t)] de signaux temporels ultrasonores de taille NxM, chaque coefficient MRi,j(t) de cette matrice représentant le signal de mesure reçu par le i-ième transducteur de réception dû à la j-ième émission.

Une telle acquisition se fait généralement à l'aide d'un dispositif de sondage à capteur multiéléments, dans lequel chaque transducteur est à la fois émetteur et récepteur, une commutation entre ces deux modes pouvant être commandée électroniquement. Le capteur peut être mis au contact de l'objet à sonder ou à distance, mais dans ce dernier cas il doit être immergé pour assurer la transmission des ondes ultrasonores dans l'objet à sonder. Ce capteur peut être linéaire (1D) ou matriciel (2D), à éléments rigides ou flexibles.

La matrice [MR(t)] de signaux temporels obtenue par ce type d'acquisition peut alors faire l'objet d'un traitement, notamment pour la fourniture d'une image de la zone d'intérêt inspectée ou pour l'extraction de paramètres significatifs de défauts de structure dans la zone d'intérêt inspectée. Compte tenu des capacités de calcul actuelles des processeurs, ce traitement peut être embarqué dans les instruments de contrôle pour des traitements en temps réel.

Dans la pratique, la commande des L transducteurs d'émission pour les M émissions successives d'ondes ultrasonores vers la zone d'intérêt peut être codée à l'aide d'une matrice de codage [MC], chaque coefficient $MC_{i,j}$ de cette matrice représentant un facteur multiplicatif appliqué à un signal temporel d'excitation commun e(t) pour son émission par le i-ième transducteur d'émission à l'occasion de la j-ième émission. Des lois de retards peuvent en outre être appliquées aux émissions successives.

Lorsque [MC] est la matrice identité et qu'aucune loi de retard n'est appliquée, l'acquisition ultrasonore précédemment définie est qualifiée d'acquisition FMC (de l'anglais « Full Matrix Capture »). Elle consiste à émettre une onde ultrasonore en excitant le premier transducteur d'émission et à recevoir les échos de cette émission avec l'ensemble des N transducteurs de réception, puis à commuter électroniquement sur l'ensemble des transducteurs d'émission pour les exciter successivement. Quand ce sont les mêmes transducteurs qui remplissent les fonctions d'émission et de réception, on obtient une matrice [MR(t)] notée [K(t)] de signaux temporels ultrasonores de taille NxN.

En imagerie, les signaux temporels ultrasonores formant les coefficients de la matrice [K(t)] sont exploités pour réaliser une focalisation synthétique de type « focalisation en tous points » qui permet d'obtenir une image de résolution optimale dans toute la zone d'intérêt. Cependant, en présence d'un fort bruit électronique ou de structure, la reconstruction par focalisation en tous points peut fournir des images de qualité moindre comparativement aux méthodes échographiques classiques. En effet, dans ces dernières, tous les transducteurs émettent de manière simultanée par application d'une loi de retards prédéterminée de manière à focaliser en un point donné. Or, conformément au procédé d'acquisition FMC généralement mis en œuvre pour réaliser ensuite la reconstruction par focalisation synthétique, chaque émission est effectuée par un seul transducteur ce qui limite l'énergie transmise et la profondeur de pénétration des ondes dans la pièce inspectée. Cela se traduit finalement par une dégradation du Rapport Signal sur Bruit (RSB) car les amplitudes des signaux échos peuvent être comparables au niveau de bruit électronique ou de structure. Cette dégradation du RSB est d'autant plus forte que l'atténuation des ondes ultrasonores est élevée (atténuation viscoélastique, ou atténuation par diffusion due à des hétérogénéités du milieu), rendant difficile la détection et la caractérisation d'éventuels défauts.

Une solution partielle à ce problème de dégradation du RSB est apportée dans l'article XP011439248 de Karaman et al, intitulé « Synthetic aperture imaging for small scale systems », publié dans IEEE Transactions on Ultrasonics, Ferroelectrics, and Frequency Control, vol. 42, n°3 (mai 1995), pages 429-442.

Elle consiste à utiliser, pour chaque émission, non plus un transducteur mais plusieurs transducteurs adjacents. Une loi de retards est appliquée aux transducteurs d'émission sollicités pour qu'ils transmettent dans le milieu une onde ultrasonore sphérique, proche de celle qui serait émise par une source virtuelle située à une certaine distance du capteur.

L'onde ultrasonore ainsi émise par la source virtuelle est plus intense puisque son énergie est proportionnelle à la racine carrée du nombre de transducteurs d'émission formant cette source. Le RSB est amélioré d'autant, en supposant que le bruit engendré est principalement du bruit électronique décorrélé. La matrice de codage [MC] correspondante comporte plusieurs coefficients non nuls dans chacune de ses colonnes, définissant précisément le nombre de transducteurs adjacents sollicités en même temps à chaque émission et les lois de retards éventuellement appliquées.

Cependant, dans le cas de pièces inspectées présentant un bruit très important, l'amélioration de la qualité des images finalement obtenues par focalisation synthétique en tous points est plus limitée, l'augmentation du RSB est moindre et l'impact sur la détection n'est pas aussi positif qu'on pourrait l'espérer. Cette solution compense en partie le problème précité mais ne l'élimine pas. En effet, l'augmentation du RSB est proportionnelle à la racine carrée du nombre de transducteurs formant chaque source virtuelle, et ce nombre est beaucoup plus petit que le nombre total de transducteurs N du capteur. Par ailleurs, émettre au moyen de sources virtuelles ne permet pas de s'affranchir du problème que peuvent poser les artefacts de reconstruction essentiellement dus aux échos parasites tels que les échos de géométrie ou les échos complexes incluant des réflexions multiples sur les frontières de l'objet et des conversions de modes.

Une autre solution à ce problème de dégradation du RSB est apportée dans l'article XP032988626 de Lopez Villaverde et al, intitulé « Ultrasonic imaging in highly attenuating materials with Walsh-Hadamard codes and the décomposition of the time reversai operator », publié à l'occasion de la conférence IEEE International Ultrasonics Symposium qui s'est tenue à Tours (FR) du 18 au 21 septembre 2016. Elle consiste à coder les émissions à l'aide d'une matrice [MC] de Hadamard notée $H_N$ ou à l'aide de matrices issues de cette matrice de Hadamard ( $H_N^+$ et/ou $H_N^-$ ). Il a été démontré qu'avec ce type de codage en émission, une matrice [MR(t)] de signaux temporels équivalente à [K(t)] après décodage est obtenue avec un RSB amélioré. Mais pour obtenir un RSB significativement meilleur que dans les solutions précédentes, elle impose généralement un grand nombre d'émissions successives, par exemple 2N-1 si l'on sollicite les transducteurs en émission à l'aide des matrices de codages $H_N^+$ et $H_N^-$.

Les documents XP011204459 (de Gran et al, intitulé « Spatial encoding using a code division technique for fast ultrasound imaging ») et US 2016/0065323 A1 portent également sur des procédés d'acquisition ultrasonore par réseau de transducteurs à codage matriciel des émissions.

Il peut ainsi être souhaité de prévoir un procédé d'acquisition de signaux ultrasonores qui permette de s'affranchir d'au moins une partie des problèmes et contraintes précités.

Il est donc proposé un procédé d'acquisition de signaux par sondage ultrasonore comportant les étapes suivantes :

- commande de L transducteurs d'émission pour M émissions successives d'ondes ultrasonores vers une zone d'intérêt,
- commande de N transducteurs de réception de manière à recevoir simultanément et pendant une durée prédéterminée, pour chacune des M émissions successives, N signaux de mesure, mesurant en particulier des échos dus à des réflexions de l'émission considérée dans la zone d'intérêt,
- obtention d'une matrice [MR(t)] de signaux temporels ultrasonores de taille NxM, chaque coefficient MRi,j(t) de cette matrice représentant le signal de mesure reçu par le i-ième transducteur de réception dû à la j-ième émission.

selon lequel :

- une matrice initiale [MC'], de taille LxM', de codage des émissions successives est préalablement définie pour un nombre M' d'émissions initiales successives strictement supérieur à M, chaque coefficient MC'i,j de cette matrice représentant un facteur multiplicatif appliqué à un signal temporel d'excitation commun e(t) pour son émission par le i-ième transducteur d'émission à l'occasion de la j-ième émission,
- un calcul de champ acoustique est réalisé pour chacune des M' émissions initiales successives,
- une matrice réduite de codage [MC], de taille LxM, est obtenue à partir de la matrice initiale de codage [MC'] par suppression de M'-M colonne(s) correspondant à M'-M émission(s) initiale(s) supprimée(s) sur la base d'un critère de sélection appliqué aux M' calculs de champs acoustiques, et
- la commande des L transducteurs d'émission pour les M émissions successives d'ondes ultrasonores vers la zone d'intérêt est codée à l'aide de la matrice réduite de codage [MC] appliquée au signal temporel d'excitation commun e(t).

Ainsi, en partant d'une matrice de codage [MC'] qui peut être l'une de celles indiquées précédemment ou autre, notamment une matrice de codage assurant un RSB satisfaisant selon l'application visée et les traitements ultérieurs envisagés, l'invention permet de réduire le nombre d'émissions en éliminant une ou plusieurs émissions sur la base d'un critère pertinent puisqu'il est lié à des calculs de champs acoustiques. Cette manière de procéder permet notamment de réduire le nombre des émissions en limitant au maximum l'impact de cette réduction sur le RSB de la matrice [MR(t)].

De façon optionnelle, la matrice [MR(t)] de signaux temporels ultrasonores est décodée pour l'obtention d'une matrice décodée [MR'(t)] calculée par produit matriciel de la façon suivante :

$$[MR'(t)] = [MR(t)] \cdot [MC]^T \cdot \left([MC] \cdot [MC]^T\right)^{-1},$$

où « T » est le symbole de transposition matricielle.

On obtient ainsi une matrice de taille NxL à partir de laquelle peuvent être envisagés les mêmes traitements que sur une matrice de signaux temporels obtenue par une acquisition classique de type FMC.

De façon optionnelle également, le calcul de champ acoustique réalisé pour chacune des M' émissions initiales successives comporte le calcul d'un modèle simplifié de champ $E_{m'}(f,\theta)$ défini pour chaque colonne d'indice m' de la matrice initiale de codage [MC'] de la façon suivante :

$$E_{m'}(f,\theta) = \sum_{l=1}^{L} MC'_{l,m'} \cdot s_l(f) \cdot D_l(f,\theta) e^{-jkld \sin\theta},$$

où :

- f est une fréquence temporelle,
- $\theta$ est un angle par rapport à une normale à un plan ou axe principal des L transducteurs d'émission lorsque ceux-ci sont alignés,
- $s_l(f)$ est une fonction de transfert d'un l-ième transducteur d'émission,
- $D_l(f,\theta)$ est une fonction de directivité du l-ième transducteur d'émission dans un milieu d'émission des ondes ultrasonores,
- e est la fonction exponentielle,
- j est le nombre complexe tel que $j^2 = -1$,
- k est un nombre d'onde défini par $k = 2\pi f/c$ où c est la célérité des ondes ultrasonores dans le milieu d'émission considéré, et
- d est un pas inter-éléments, c'est-à-dire une largeur commune des transducteurs d'émission ajoutée à une distance entre deux transducteurs voisins.

De façon optionnelle également, le calcul de champ acoustique réalisé pour chacune des M' émissions initiales successives comporte en outre le calcul d'une valeur intégrée de champ $A_{m'}(\theta)$ à partir de chaque modèle simplifié de champ $E_{m'}(f,\theta)$ de la façon suivante :

$$A_{m'}(\theta) = \left| \int_{f_{min}}^{f_{max}} E_{m'}(f,\theta) df \right| = \left| \sum_{l=1}^{L} MC'_{l,m'} \cdot \int_{f_{min}}^{f_{max}} s_l(f) \cdot D_l(f,\theta) e^{-jkld \sin\theta} \right|,$$

où $f_{min}$ et $f_{max}$ sont des fréquences respectivement minimale et maximale d'une bande passante du signal temporel d'excitation commun e(t).

De façon optionnelle également, le critère de sélection appliqué aux M' calculs de champs acoustiques comporte un seuil en amplitude en dessous duquel les contributions du champ acoustique sont considérées comme négligeables.

De façon optionnelle également, chaque colonne de la matrice initiale de codage [MC'] produisant une émission initiale dont le calcul de champ acoustique ne fournit pas de valeur supérieure ou égale au seuil en amplitude est supprimée.

De façon optionnelle également, le critère de sélection appliqué aux M' calculs de champs acoustiques comporte en outre un seuillage angulaire consistant à écarter toute contribution du champ acoustique en dehors d'un secteur angulaire prédéterminé.

De façon optionnelle également, la matrice initiale de codage [MC'] est une matrice de Hadamard ou obtenue à partir d'une matrice de Hadamard.

Il est également proposé un programme d'ordinateur téléchargeable depuis un réseau de communication et/ou enregistré sur un support lisible par ordinateur et/ou exécutable par un processeur, comprenant des instructions pour l'exécution des étapes d'un procédé d'acquisition de signaux selon l'invention, lorsque ledit programme est exécuté sur un ordinateur.

Il est également proposé un dispositif de sondage à ultrasons comportant :

- une sonde comprenant une pluralité de transducteurs d'émission à ultrasons et une pluralité de transducteurs de réception à ultrasons, et
- des moyens de commande des transducteurs et de traitement conçus pour mettre en œuvre un procédé d'acquisition de signaux selon l'invention.

L'invention sera mieux comprise à l'aide de la description qui va suivre, donnée uniquement à titre d'exemple et faite en se référant aux dessins annexés dans lesquels :

- la figure 1 représente schématiquement la structure générale d'un dispositif de sondage à ultrasons selon un mode de réalisation de l'invention,
- les figures 2A, 2B et 2C illustrent trois exemples de champs acoustiques correspondant à respectivement trois émissions codées réalisées par un dispositif de sondage tel que celui de la figure 1,
- les figures 3A, 3B et 3C illustrent trois exemples de calculs de champs acoustiques correspondant à respectivement trois émissions codées réalisées par un dispositif de sondage tel que celui de la figure 1,
- la figure 4 illustre un autre exemple de calcul de champ acoustique exploitant notamment les calculs des figures 3A, 3B et 3C,
- la figure 5 illustre l'effet d'un seuillage réalisé sur le résultat du calcul de la figure 4,
- la figure 6 illustre l'effet d'une binarisation réalisée sur le résultat de la figure 5 en vue d'une suppression d'émissions codées,
- la figure 7 représente schématiquement une installation expérimentale de tests comparatifs,
- la figure 8 est un diagramme illustrant des résultats de tests comparatifs obtenus avec ou sans dispositif de sondage selon l'invention sur l'installation expérimentale de la figure 7,
- les figures 9A, 9B et 9C illustrent trois images obtenues par focalisation synthétique en tous points sur des signaux temporels obtenus par une acquisition avec ou sans dispositif de sondage selon l'invention sur l'installation expérimentale de la figure 7, et
- la figure 10 illustre les étapes d'un procédé d'acquisition de signaux ultrasonores mis en œuvre par le dispositif de la figure 1.

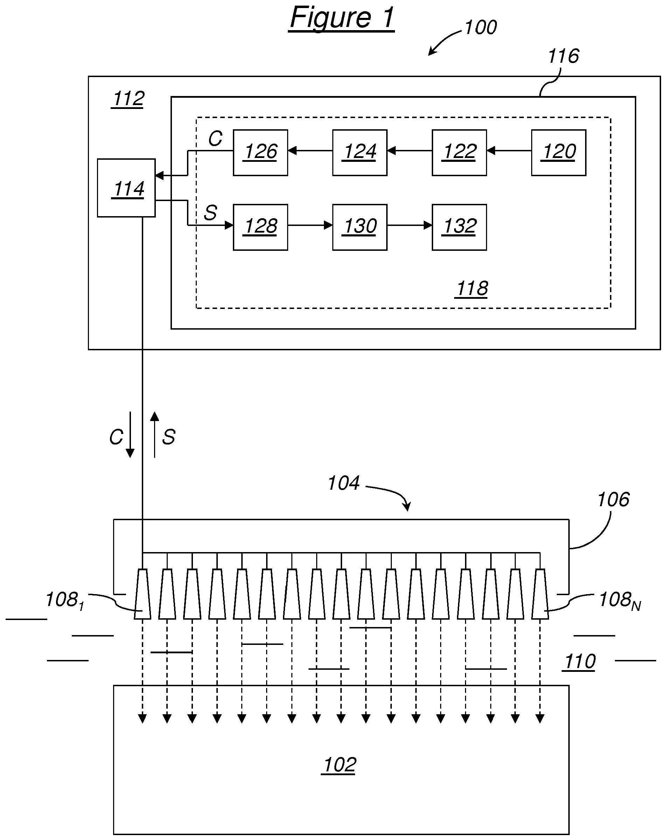

En référence à la figure 1, un dispositif de sondage 100 d'un objet 102 selon un mode de réalisation de l'invention comporte une sonde à ultrasons 104 présentant un boîtier 106, c'est-à-dire un élément de structure indéformable qui sert de référentiel attaché à la sonde 104, dans lequel sont disposés, par exemple linéairement ou matriciellement, N transducteurs $108_1$, ...,$108_N$ fixes ou mobiles.

L'objet 102 est par exemple une pièce mécanique que l'on souhaite examiner par contrôle non destructif ou bien, dans un contexte médical, une partie de corps humain que l'on souhaite contrôler de manière non invasive. Dans le mode de réalisation de la figure 1, l'objet 102 est immergé dans un liquide, tel que de l'eau 110, et la sonde 104 est maintenue à distance de l'objet 102 afin que l'eau 110 les sépare. Mais dans un autre mode de réalisation équivalent, la sonde 104 pourrait être au contact direct de l'objet 102.

Les transducteurs $108_1$, ...,$108_N$ sont conçus pour émettre des ondes ultrasonores en direction de l'objet 102 en réponse à des signaux de commande identifiés sous la référence générale C, selon des directions principales parallèles les unes aux autres, indiquées par des flèches en pointillés sur la figure 1, et dans un plan principal qui est celui de la figure.

Les transducteurs $108_1$, ...,$108_N$ sont en outre conçus pour détecter des échos des ondes ultrasonores se réfléchissant sur et dans l'objet 102 et pour fournir des signaux de mesure identifiés sous la référence générale S et correspondant à ces échos. Ainsi, dans l'exemple non limitatif de la figure 1, les N transducteurs $108_1$, ...,$108_N$ remplissent à la fois les fonctions d'émission et de réception, mais des récepteurs différents des émetteurs pourraient également être prévus dans des boîtiers différents et indépendants tout en restant conformes avec les principes de l'invention. De plus, le nombre L d'émetteurs pourrait tout à fait être différent du nombre N de récepteurs.

Le dispositif de sondage 100 comporte en outre un circuit électronique 112 de commande des transducteurs $108_1$, ...,$108_N$ de la sonde 104 et de traitement des signaux de mesure S. Ce circuit électronique 112 est connecté à la sonde 104 afin de lui transmettre les signaux de commande C et afin de recevoir les signaux de mesure S. Le circuit électronique 112 est par exemple celui d'un ordinateur. Il présente une unité centrale de traitement 114, telle qu'un microprocesseur conçu pour émettre vers la sonde 104 les signaux de commande C et pour recevoir de la sonde 104 les signaux de mesure S, et une mémoire 116 dans laquelle est enregistré un programme d'ordinateur 118.

Le programme d'ordinateur 118 comporte tout d'abord des instructions 120 pour définir M' émissions initiales successives à l'aide d'une matrice initiale de codage [MC'] de taille LxM', c'est-à-dire de taille NxM' dans l'exemple non limitatif considéré. Chaque coefficient MC'$_{i,j}$ de cette matrice représente un facteur multiplicatif appliqué à un signal temporel d'excitation e(t), commun à tous les transducteurs $108_1$, ...,$108_N$, pour son émission par le i-ième transducteur d'émission à l'occasion de la j-ième émission. Ce facteur multiplicatif peut inclure un retard d'une loi de retards appliquée à la j-ième émission initiale concernée. La matrice initiale de codage [MC'] peut être prédéterminée et enregistrée en mémoire, choisie à l'aide des instructions 120 parmi un ensemble de matrices initiales de codage enregistrées en mémoire, définie via une interface homme-machine à l'aide des instructions 120, etc.

Comme indiqué précédemment, la matrice initiale de codage [MC'] peut être la matrice identité pour M' = L = N émissions initiales successives conformes à une acquisition FMC.

Elle peut aussi être une matrice dont les coefficients non nuls incluant des lois de retards sont situés autour de sa diagonale principale, pour M' < L = N émissions initiales successives conformes à une acquisition telle qu'enseignée dans l'article de Karaman et al précité.

Elle peut aussi être une matrice carrée de Hadamard H$_N$, pour M' = L = N émissions initiales successives conformes à une acquisition telle qu'enseignée au chapitre II.A de l'article de Lopez Villaverde et al précité. Dans ce cas, le nombre N doit être une puissance de 2.

Elle peut aussi être une matrice obtenue à partir d'une matrice de Hadamard, pour M' émissions initiales successives conformes à une acquisition telle qu'enseignée au chapitre III.B de l'article de Lopez Villaverde et al précité.

Par exemple, il peut s'agir d'une concaténation horizontale de deux matrices $H_N^+$ et $H_N^-$ issues de la matrice

$H_N$ ($H_N^+ = \frac{1}{2}(J_N + H_N)$ et $H_N^- = \frac{1}{2}(J_N - H_N)$), où $J_N$ est la matrice de taille NxN dont tous les coefficients sont à 1), pour M' = 2L-1 = 2N-1 émissions initiales successives. Il peut également s'agir simplement de la matrice $H_N^+$, pour M' = L = N émissions initiales successives.

D'autres matrices initiales de codage [MC'] peuvent être envisagées par l'homme du métier en fonction des applications concrètes visées.

Le programme d'ordinateur 118 comporte en outre des instructions 122 pour exécuter un calcul de champ acoustique pour chacune des M' émissions initiales successives définies dans la matrice initiale de codage [MC']. Ce champ acoustique est dépendant des transducteurs eux-mêmes, notamment des matériaux dans lesquels ils sont conçus et de leur taille, de leur disposition et du milieu dans lequel les ondes acoustiques sont émises.

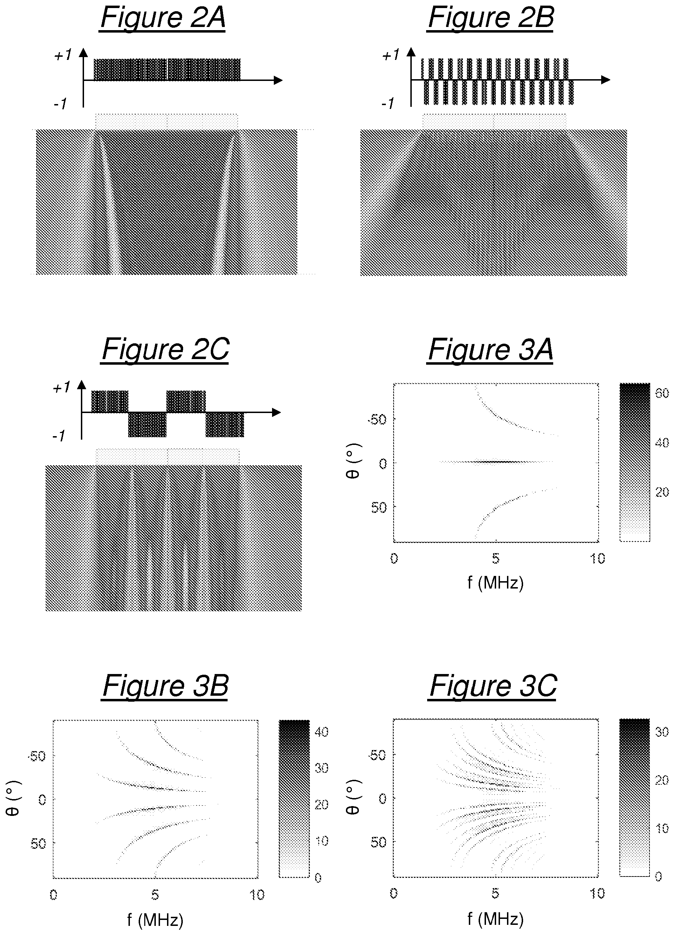

Les figures 2A, 2B et 2C illustrent en coordonnées cartésiennes et en spectres d'amplitude des exemples de champs acoustiques obtenus en réponse à des émissions codées prédéterminées. Dans ces trois exemples, les transducteurs $108_1$, ...,$108_N$ sont alignés, ils sont émetteurs et récepteurs, N = 64 et la matrice initiale de codage [MC'] est la matrice de Hadamard H$_{64}$. Plus précisément, la figure 2A illustre le champ acoustique obtenu en coordonnées cartésiennes à l'aide d'une première émission initiale codée par la première colonne de la matrice H$_{64}$, constituée uniquement de coefficients à 1. Le champ acoustique obtenu est donc celui d'une onde plane progressant dans la direction de la normale aux transducteurs. La figure 2B illustre le champ acoustique obtenu à l'aide d'une troisième émission initiale codée par la troisième colonne de la matrice H$_{64}$. La figure 2C illustre le champ acoustique obtenu à l'aide d'une dix-septième émission initiale codée par la dix-septième colonne de la matrice H$_{64}$.

Il est à la portée de l'homme du métier de procéder à un calcul de champ acoustique compte tenu de ses connaissances générales en la matière, mais un calcul particulièrement astucieux, visant à réduire les temps de calcul, est fourni ci-dessous. Il consiste à proposer un modèle simplifié de champ E$_{m'}$(f,θ) défini pour chaque colonne d'indice m' de la matrice initiale de codage [MC'] de la façon suivante :

$$E_{m'}(f,\theta) = \sum_{l=1}^{L} MC'_{l,m'} \cdot s_l(f) \cdot D_l(f,\theta) e^{-jkld\sin\theta} \ ,$$

où :

- f est une fréquence temporelle, par exemple exprimée en MHz,
- θ est un angle par rapport à une normale à un plan ou axe principal des transducteurs lorsque ceux-ci sont alignés,
- L = N dans l'exemple illustré,
- s$_l$(f) est une fonction de transfert du transducteur $108_l$, par exemple prenant la forme d'un signal gaussien autour d'une fréquence centrale,
- D$_l$(f,θ) est une fonction de directivité du transducteur $108_l$ dans le milieu d'émission des ondes ultrasonores, par exemple telle qu'enseignée en tant qu'équation (7) dans l'article de Fan et al, intitulé « A comparison between ultrasonic array beamforming and super resolution imaging algorithms for non-destructive évaluation », publié dans Ultrasonics, volume 54, n° 7, pages 1842-1850, septembre 2014,
- e est la fonction exponentielle,
- j est le nombre complexe tel que $j^2 = -1$,
- k est un nombre d'onde défini par $k = 2\pi f/c$ où c est la célérité des ondes ultrasonores dans le milieu d'émission considéré, et
- d est le pas inter-éléments, c'est-à-dire la largeur commune des transducteurs ajoutée à la distance entre deux transducteurs voisins.

Les figures 3A, 3B et 3C illustrent des exemples de calculs simplifiés de champs acoustiques obtenus en réponse à des émissions codées prédéterminées. Dans ces trois exemples, les transducteurs $108_1$, ...,$108_N$ sont alignés, ils sont émetteurs et récepteurs, N = 64 et la matrice initiale de codage [MC'] est la matrice de Hadamard $H_{64}$. De plus, le pas inter-éléments d est égal à 0,6 mm, la célérité c est égale à 2,3 mm/$\mu$s, la fonction $s_l(f)$ est choisie comme prenant la forme d'un signal gaussien de fréquence centrale à 5 MHz avec une bande passante de 60% à -6 dB et la fonction $D_l(f,\theta)$ est définie selon l'enseignement de l'article de Fan et al précité pour une largeur commune des transducteurs de 0,5 mm. Plus précisément, la figure 3A illustre un résultat du calcul de champ acoustique obtenu pour la première colonne de la matrice $H_{64}$ : la fréquence f, variant de 0 à 10 MHz, est représentée sur l'axe des abscisses d'un repère bidimensionnel ; l'angle $\theta$, variant de -90 à +90 degrés, est représenté sur l'axe des ordonnées de ce repère bidimensionnel ; chaque point du repère bidimensionnel situé à l'intérieur des variations possibles de f et $\theta$ est représenté en niveau de gris et en unité arbitraire selon l'amplitude en valeur absolue du champ acoustique calculé en ce point. De même, la figure 3B illustre un résultat du calcul de champ acoustique obtenu pour la quatrième colonne de la matrice $H_{64}$. De même, la figure 3C illustre un résultat du calcul de champ acoustique obtenu pour la seizième colonne de la matrice $H_{64}$.

De façon optionnelle mais avantageuse, les instructions 122 poursuivent le calcul des M' champs acoustiques précédents en intégrant les résultats sur la bande passante fréquentielle du signal temporel d'excitation e(t). Notons $f_{min}$ et $f_{max}$ les fréquences respectivement minimale et maximale de cette bande passante. On obtient alors une valeur intégrée de champ $A_{m'}(\theta)$ ne dépendant plus que de $\theta$, définie pour chaque colonne d'indice m' de la matrice initiale de codage [MC'] de la façon suivante :

$$A_{m'}(\theta) = \left| \int_{f_{min}}^{f_{max}} E_{m'}(f,\theta)df \right| = \left| \sum_{l=1}^{L} MC'_{l,m'} \cdot \int_{f_{min}}^{f_{max}} s_l(f) \cdot D_l(f,\theta)e^{-jkld\sin\theta} \right|.$$

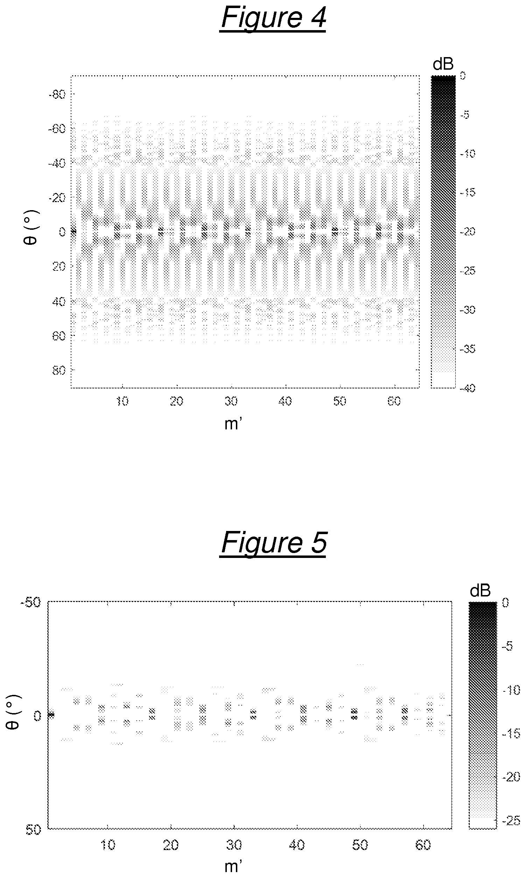

Le diagramme de la figure 4 illustre ainsi les variations de cette valeur intégrée de champ acoustique en fonction des émissions initiales successives, variant de la première à la M'-ième (avec M' = N = 64 dans l'exemple illustré) sur l'axe des abscisses d'un repère bidimensionnel, et en fonction des valeurs possibles de l'angle $\theta$, variant de -90 à +90 degrés sur l'axe des ordonnées de ce repère bidimensionnel. Plus précisément, le diagramme de la figure 4 illustre cette valeur intégrée en valeurs logarithmiques en calculant le niveau de gris de chaque point du repère bidimensionnel situé à l'intérieur des variations possibles de m' et $\theta$ sur la base de la valeur suivante :

$$ALOG_{m'}(\theta) = 20 \cdot \log\left(\frac{A_{m'}(\theta)}{A_1(0)}\right).$$

On remarque en effet que $A_1(0)$ est la valeur maximale que peut prendre $A_{m'}(\theta)$ en fonction de m' et $\theta$.
Le programme d'ordinateur 118 comporte en outre des instructions 124 pour supprimer M'-M colonne(s) de la matrice initiale de codage [MC'] (M<M'), cette ou ces colonnes supprimées correspondant à M'-M émissions initiales supprimées sur la base d'un critère de sélection appliqué aux M' calculs de champs acoustiques exécutés par les instructions 122. Ces instructions permettent l'obtention d'une matrice réduite de codage [MC] de taille LxM, ne comportant que les colonnes non supprimées de la matrice initiale de codage [MC'] et définissant les M émissions ainsi sélectionnées.

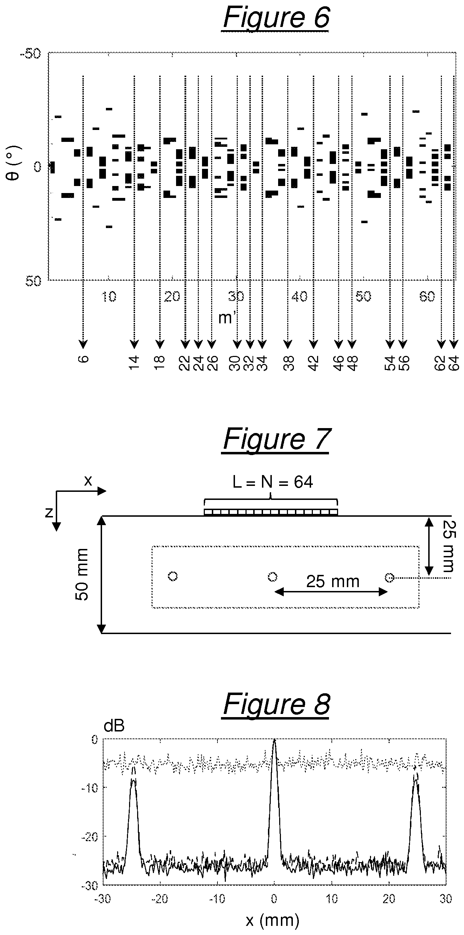

Les figures 5 et 6 illustrent l'application d'un exemple non limitatif de critère de sélection. La figure 5 illustre en particulier l'application d'un seuil en amplitude TH aux valeurs logarithmiques $ALOG_{m'}(\theta)$ de la figure 4 en dessous duquel les contributions du champ acoustique sont considérées comme négligeables. Ce seuil TH est par exemple fixé à 5% du maximum d'amplitude atteint par $A_{m'}(\theta)$ sur l'ensemble des émissions et pour tous les angles $\theta$, soit -26 dB en échelle logarithmique. Ce seuil en amplitude TH pourrait optionnellement être complété par un seuillage angulaire consistant à écarter toute contribution du champ acoustique en dehors d'un secteur angulaire prédéterminé. On s'aperçoit néanmoins que dans l'exemple des figures 4 et 5 un tel seuillage angulaire est implicite puisqu'aucune valeur logarith-

mique $ALOG_{m'}(\theta)$ ne dépasse -26 dB au-delà du secteur angulaire [-30° ; +30°]. La figure 6 reprend la figure 5 après binarisation de ses valeurs. Toutes les valeurs $A_{m'}(\theta)$ non nulles après seuillage sont illustrées en noir, les autres en blanc. On s'aperçoit alors sur la figure 6 que certaines émissions initiales peuvent être considérées dans leur ensemble comme de contribution négligeable puisque les valeurs correspondantes $A_{m'}(\theta)$ pour tous les angles $\theta$ sont inférieures au seuil TH, c'est-à-dire nulles après binarisation. Il s'agit dans cet exemple des émissions d'indices m' = 6, 14, 18, 22, 24, 26, 30, 32, 34, 38, 42, 46, 48, 54, 56, 62 et 64. Le critère de sélection consiste donc à supprimer les colonnes correspondantes dans la matrice initiale de codage [MC'] pour obtenir la matrice réduite de codage [MC]. Dans l'exemple illustré, les dix-sept colonnes d'indices m' = 6, 14, 18, 22, 24, 26, 30, 32, 34, 38, 42, 46, 48, 54, 56, 62 et 64 de la matrice initiale de codage [MC'] = $H_{64}$ sont ainsi supprimées pour l'obtention d'une matrice réduite de codage [MC] à M = 47 colonnes. On réduit de cette façon le nombre d'émissions successives d'un peu plus de 26% sans détérioration sensible du RSB en réception.

Le programme d'ordinateur 118 comporte en outre des instructions 126 pour générer les signaux C de commande des transducteurs $108_1$, ...,$108_N$ de manière à :

- activer les L = N transducteurs $108_1$, ...,$108_N$ en tant qu'émetteurs pour exécuter les M émissions successives sélectionnées d'ondes ultrasonores vers une zone d'intérêt de l'objet 102,
- activer les N transducteurs $108_1$, ...,$108_N$ en tant que récepteurs pour, suite à chacune des M émissions successives, recevoir simultanément, par ces N récepteurs et pendant une durée prédéterminée de la profondeur d'inspection souhaitée, N signaux de mesure mesurant en particulier des échos dus à des réflexions de l'émission considérée dans la zone d'intérêt.

L'ensemble S des NxM signaux de mesure ainsi transmis par les transducteurs $108_1$, ...,$108_N$ est renvoyé par la sonde 104 à l'unité centrale de traitement 114.

Le programme d'ordinateur 118 comporte alors en outre des instructions 128 pour construire une matrice [MR(t)] de signaux temporels ultrasonores de taille NxM, chaque coefficient $MR_{i,j}(t)$ de cette matrice représentant le signal de mesure reçu par le transducteur $108_i$ en réponse à la j-ième émission.

De façon optionnelle, le programme d'ordinateur 118 comporte en outre des instructions 130 pour effectuer un filtrage temporel de la matrice [MR(t)], ce filtrage visant à supprimer toute information se trouvant à des temps de vol exclus de la zone d'intérêt dans l'objet 102.

Enfin, le programme d'ordinateur 118 comporte des instructions, désignées par la référence générale 132, de traitement de la matrice [MR(t)]. Le ou les traitements réalisés par les instructions 132 peuvent inclure :

- un décodage éventuel en fonction de la matrice réduite de codage [MC] obtenue à l'aide des instructions 124,
- un traitement de réduction de bruit tel que par exemple celui enseigné dans la demande de brevet WO 2014/009671 A1,
- une focalisation adaptative et sélective telle qu'un filtrage de type DORT (pour « Décomposition de l'opérateur de Retournement Temporel),
- une reconstitution d'image numérique de la zone d'intérêt dans l'objet 102 par focalisation synthétique de type « focalisation en tous points », ou par un autre traitement spécifique connu en soi en vue d'obtenir une image de type B-Scan, S-Scan, ou autre.

Il peut en particulier être démontré que la matrice [MR'(t)], obtenue par le décodage suivant :

$$[MR'(t)] = [MR(t)] \cdot [MC]^T \cdot ([MC] \cdot [MC]^T)^{-1} \, ,$$

est une matrice qui peut être exploitée de la même façon que la matrice de signaux temporels obtenue par une acquisition classique de type FMC. On remarque qu'elle est d'une façon générale de taille NxL, c'est-à-dire carrée de taille NxN lorsque les transducteurs sont émetteurs et récepteurs. Elle est toutefois nettement moins bruitée que celle obtenue par une acquisition classique.

A titre expérimental, une simulation a été réalisée pour l'exemple des figures précédentes, i.e. : les transducteurs $108_1$, ...,$108_N$ sont alignés; L = N = 64 ; la matrice initiale de codage [MC'] est la matrice de Hadamard $H_{64}$ ; le pas interéléments d est égal à 0,6 mm ; le milieu de propagation est tel que la célérité c est égale à 2,3 mm/μs ; la fonction $s_l(f)$ est choisie comme prenant la forme d'un signal gaussien de fréquence centrale à 5 MHz avec une bande passante de 60% à -6 dB ; la fonction $D_l(f,\theta)$ est définie selon l'enseignement de l'article de Fan et al précité pour une largeur commune des transducteurs de 0,5 mm. De plus, comme le montre la figure 7, le milieu inspecté comporte trois défauts artificiels de type Trou Génératrice (TG) à une profondeur de 25 mm et ils sont distants de 25 mm entre eux.

En procédant à la sélection telle que définie précédemment et en supprimant ainsi dix-sept colonnes sur soixante-quatre dans la matrice de Hadamard $H_{64}$, on obtient les résultats comparatifs de la figure 8. La première courbe en trait continu illustre à la profondeur de 25 mm l'amplitude en décibels des signaux obtenus, après décodage, par application de la matrice réduite de codage [MC] à quarante-sept colonnes. La deuxième courbe en traits interrompus courts, à peine visible derrière la courbe en trait continu, illustre à la profondeur de 25 mm l'amplitude en décibels des signaux obtenus sans réduction de la matrice initiale de codage $H_{64}$. Cette quasi-superposition des deux courbes montre que la suppression des dix-sept colonnes ne contribuant pas de façon sensible au champ acoustique émis n'a pas d'impact non plus sensible sur les résultats. Enfin, la troisième courbe en traits pointillés illustre à la profondeur de 25 mm l'amplitude en décibels des signaux obtenus par acquisition FMC. Cette troisième courbe illustre tout l'intérêt du codage (initial) par matrice de Hadamard.

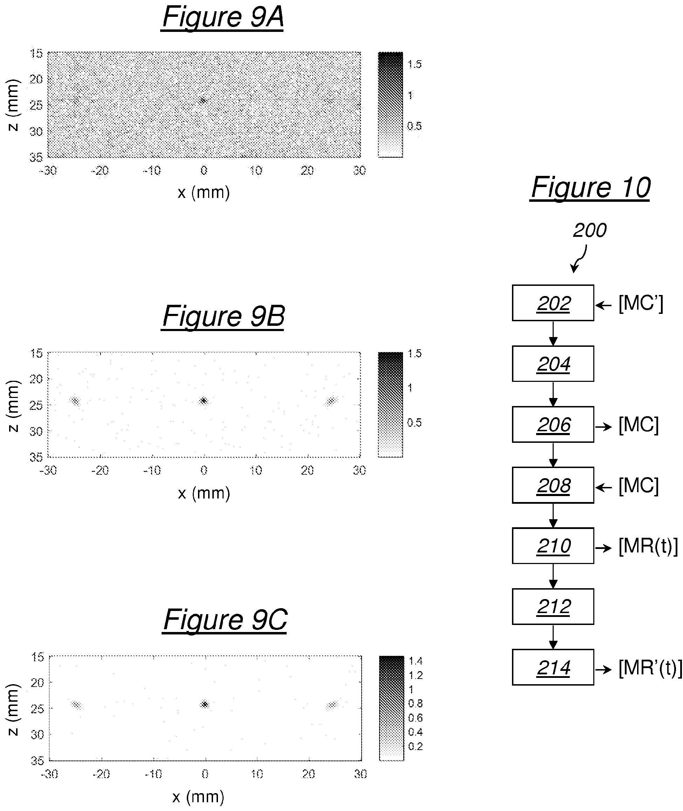

Si l'on reconstitue des images numériques par focalisation synthétique de type « focalisation en tous points » sur chacun des résultats précédents, on obtient les images des figures 9A, 9B et 9C. Plus précisément, la figure 9A illustre l'image obtenue par focalisation en tous points sur une acquisition FMC classique. La figure 9B illustre l'image obtenue par focalisation en tous points sur une acquisition codée par matrice de Hadamard $H_{64}$. La figure 9C illustre l'image obtenue par focalisation en tous points sur une acquisition codée par la matrice réduite de codage obtenue par suppression des dix-sept colonnes précitées de la matrice de Hadamard $H_{64}$. Les images des figures 9B et 9C sont nettement moins bruitées que l'image de la figure 9A. Par ailleurs, les images des figures 9B et 9C sont de qualités très comparables alors que celle de la figure 9C a été obtenue par une acquisition nettement plus rapide (gain de 26% en termes de nombre d'émissions successives).

En référence à la figure 10, un procédé 200 d'acquisition et de traitement de signaux ultrasonores mis en œuvre par le dispositif 100 de la figure 1 va à présent être décrit.

Au cours d'une étape 202, l'unité de traitement 114 exécutant les instructions 120 définit M' émissions initiales successives à l'aide d'une matrice initiale de codage [MC'] de taille LxM', c'est-à-dire de taille NxM' dans l'exemple non limitatif considéré.

Au cours d'une étape 204, l'unité de traitement 114 exécutant les instructions 122 effectue un calcul de champ acoustique pour chacune des M' émissions initiales successives définies dans la matrice initiale de codage [MC'], par exemple conformément à l'exemple illustré par les figures 3A, 3B, 3C et 4.

Au cours d'une étape 206, l'unité de traitement 114 exécutant les instructions 124 supprime M'-M colonne(s) de la matrice initiale de codage [MC'] (M<M'), cette ou ces colonnes supprimées correspondant à M'-M émissions initiales supprimées sur la base d'un critère de sélection appliqué aux M' calculs de champs acoustiques exécutés par les instructions 122, pour l'obtention d'une matrice réduite de codage [MC] de taille LxM, c'est-à-dire de taille NxM dans l'exemple non limitatif considéré. Le critère de sélection appliqué est par exemple celui illustré par les figures 5 et 6.

Au cours d'une étape 208, l'unité de traitement 114 exécutant les instructions 126 commande les séquences d'émissions et de réceptions des transducteurs $108_1$, ...,$108_N$ à l'aide de la matrice réduite de codage [MC] pour l'acquisition de la matrice [MR(t)]. Après chaque tir, les signaux sont reçus sur l'ensemble des N transducteurs, numérisés et transmis au circuit électronique 112.

Au cours d'une étape 210, l'unité de traitement 114 exécutant les instructions 128 construit la matrice [MR(t)], chaque coefficient $MR_{i,j}(t)$ de cette matrice représentant le signal de mesure reçu par le transducteur $108_i$ en réponse à la j-ième émission, ce signal étant numérisé pour faciliter son traitement ultérieur.

Au cours d'une étape 212 optionnelle, l'unité de traitement 114 exécutant les instructions 130 effectue un filtrage temporel de la matrice [MR(t)], ce filtrage visant à supprimer toute information se trouvant à des temps de vol exclus de la zone d'intérêt. Cette étape 206 a pour but de faciliter les traitements ultérieurs, en particulier lorsque les défauts à imager sont proches d'une interface fortement échogène, tel un fond de pièce. Elle permet de limiter la zone à imager à un voisinage proche des défauts en excluant notamment les interfaces échogènes perturbatrices. Elle trouve tout son intérêt dans l'imagerie de fissures se formant depuis le fond de l'objet.

Enfin, au cours d'une dernière étape 214, l'unité de traitement 114 exécutant les instructions 132 effectue l'un ou plusieurs des traitements cités précédemment : décodage éventuel en fonction de la matrice réduite de codage [MC] employée pour obtenir la matrice [MR'(t)] définie précédemment, réduction de bruit, focalisation adaptative et sélective, reconstitution d'image numérique de la zone d'intérêt dans l'objet 102, etc.

Il apparaît clairement qu'un dispositif de sondage tel que celui décrit précédemment, mettant en œuvre le procédé d'acquisition détaillé ci-dessus, permet de simplifier l'acquisition des signaux ultrasonores en réduisant le nombre des émissions, tout en limitant au maximum l'impact de cette réduction sur le RSB de la matrice de signaux temporels obtenue.

On notera par ailleurs que l'invention n'est pas limitée au mode de réalisation décrit précédemment. Il apparaîtra en effet à l'homme de l'art que diverses modifications peuvent être apportées au mode de réalisation décrit ci-dessus, à la lumière de l'enseignement qui vient de lui être divulgué.

En particulier, au moins une partie des instructions de programme d'ordinateur 120, 122, 124, 126, 128, 130 et 132 pourrait être remplacée par des circuits électroniques micro programmés ou micro câblés, dédiés aux fonctions réalisées lors de l'exécution de ces instructions.

Par ailleurs, les résultats et calculs des figures 3A à 9C ont été obtenus et réalisés à partir d'un codage en émission par matrice de Hadamard, mais des résultats et calculs similaires peuvent être obtenus et réalisés à partir d'un codage en émission tel que l'un de ceux décrits au chapitre III.B de l'article de Lopez Villaverde et al précité ou autre. La nature de la matrice initiale de codage ne change rien aux principes de la présente invention.

Par ailleurs également, dans le mode de réalisation détaillé précédemment, L = N = M'. Mais il n'y a aucune raison particulière pour que ces trois paramètres soient égaux d'une manière générale.

D'une façon générale, dans les revendications qui suivent, les termes utilisés ne doivent pas être interprétés comme limitant les revendications au mode de réalisation exposé dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en œuvre de l'enseignement qui vient de lui être divulgué.

**Revendications**

1.  Procédé (200) d'acquisition de signaux par sondage ultrasonore comportant les étapes suivantes :

    - commande (208) de L transducteurs d'émission ($108_1$, ..., $108_N$) pour M émissions successives d'ondes ultrasonores vers une zone d'intérêt (102),
    - commande (208) de N transducteurs de réception ($108_1$, ..., $108_N$) de manière à recevoir simultanément et pendant une durée prédéterminée, pour chacune des M émissions successives, N signaux de mesure, mesurant en particulier des échos dus à des réflexions de l'émission considérée dans la zone d'intérêt,
    - obtention (210) d'une matrice [MR(t)] de signaux temporels ultrasonores de taille NxM, chaque coefficient $MR_{i,j}(t)$ de cette matrice représentant le signal de mesure reçu par le i-ième transducteur de réception dû à la j-ième émission,

    **caractérisé en ce que** :

    - une matrice initiale [MC'], de taille LxM', de codage des émissions successives est préalablement définie (202) pour un nombre M' d'émissions initiales successives strictement supérieur à M, chaque coefficient $MC'_{i,j}$ de cette matrice représentant un facteur multiplicatif appliqué à un signal temporel d'excitation commun e(t) pour son émission par le i-ième transducteur d'émission à l'occasion de la j-ième émission,
    - un calcul de champ acoustique est réalisé (204) pour chacune des M' émissions initiales successives,
    - une matrice réduite de codage [MC], de taille LxM, est obtenue (206) à partir de la matrice initiale de codage [MC'] par suppression de M'-M colonne(s) correspondant à M'-M émissions initiale(s) supprimée(s) sur la base d'un critère de sélection appliqué aux M' calculs de champs acoustiques, et
    - la commande (208) des L transducteurs d'émission pour les M émissions successives d'ondes ultrasonores vers la zone d'intérêt est codée à l'aide de la matrice réduite de codage [MC] appliquée au signal temporel d'excitation commun e(t).

2.  Procédé (200) d'acquisition de signaux selon la revendication 1, dans lequel la matrice [MR(t)] de signaux temporels ultrasonores est décodée (214) pour l'obtention d'une matrice décodée [MR'(t)] calculée par produit matriciel de la façon suivante :

$$[MR'(t)] = [MR(t)] \cdot [MC]^T \cdot ([MC] \cdot [MC]^T)^{-1} ,$$

où « T » est le symbole de transposition matricielle.

3.  Procédé (200) d'acquisition de signaux selon la revendication 1 ou 2, dans lequel le calcul de champ acoustique réalisé (204) pour chacune des M' émissions initiales successives comporte le calcul d'un modèle simplifié de champ $E_{m'}(f,\theta)$ défini pour chaque colonne d'indice m' de la matrice initiale de codage [MC'] de la façon suivante :

$$E_{m'}(f,\theta) = \sum_{l=1}^{L} MC'_{l,m'} \cdot s_l(f) \cdot D_l(f,\theta)e^{-jkld\sin\theta},$$

où :

- f est une fréquence temporelle,
- $\theta$ est un angle par rapport à une normale à un plan ou axe principal des L transducteurs d'émission ($108_1$, ..., $108_N$) lorsque ceux-ci sont alignés,
- $s_l(f)$ est une fonction de transfert d'un l-ième transducteur d'émission,
- $D_l(f,\theta)$ est une fonction de directivité du l-ième transducteur d'émission dans un milieu d'émission des ondes ultrasonores,
- e est la fonction exponentielle,
- j est le nombre complexe tel que $j^2 = -1$,
- k est un nombre d'onde défini par $k = 2\pi f/c$ où c est la célérité des ondes ultrasonores dans le milieu d'émission considéré, et
- d est un pas inter-éléments, c'est-à-dire une largeur commune des transducteurs d'émission ($108_1$, ..., $108_N$) ajoutée à une distance entre deux transducteurs voisins.

4. Procédé (200) d'acquisition de signaux selon la revendication 3, dans lequel le calcul de champ acoustique réalisé (204) pour chacune des M' émissions initiales successives comporte en outre le calcul d'une valeur intégrée de champ $A_{m'}(\theta)$ à partir de chaque modèle simplifié de champ $E_{m'}(f,\theta)$ de la façon suivante :

$$A_{m'}(\theta) = \left| \int_{f_{min}}^{f_{max}} E_{m'}(f,\theta)df \right| = \left| \sum_{l=1}^{L} MC'_{l,m'} \cdot \int_{f_{min}}^{f_{max}} s_l(f) \cdot D_l(f,\theta)e^{-jkld\sin\theta} \right|,$$

où $f_{min}$ et $f_{max}$ sont des fréquences respectivement minimale et maximale d'une bande passante du signal temporel d'excitation commun e(t).

5. Procédé (200) d'acquisition de signaux selon l'une quelconque des revendications 1 à 4, dans lequel le critère de sélection appliqué aux M' calculs de champs acoustiques comporte un seuil en amplitude en dessous duquel les contributions du champ acoustique sont considérées comme négligeables.

6. Procédé (200) d'acquisition de signaux selon la revendication 5, dans lequel chaque colonne de la matrice initiale de codage [MC'] produisant une émission initiale dont le calcul de champ acoustique ne fournit pas de valeur supérieure ou égale au seuil en amplitude est supprimée (206).

7. Procédé (200) d'acquisition de signaux selon l'une quelconque des revendications 1 à 6, dans lequel le critère de sélection appliqué aux M' calculs de champs acoustiques comporte en outre un seuillage angulaire consistant à écarter toute contribution du champ acoustique en dehors d'un secteur angulaire prédéterminé.

8. Procédé (200) d'acquisition de signaux selon l'une quelconque des revendications 1 à 7, dans lequel la matrice initiale de codage [MC'] est une matrice de Hadamard ou obtenue à partir d'une matrice de Hadamard.

9. Programme d'ordinateur (118) téléchargeable depuis un réseau de communication et/ou enregistré sur un support lisible par ordinateur et/ou exécutable par un processeur (114), **caractérisé en ce qu'**il comprend des instructions qui conduisent un dispositif de sondage à ultrasons (100) selon la revendication 10 à exécuter les étapes d'un procédé (200) d'acquisition de signaux selon l'une quelconque des revendications 1 à 8.

10. Dispositif de sondage à ultrasons (100) comportant :

- une sonde (104) comprenant une pluralité de transducteurs ($108_1$, ..., $108_N$) d'émission à ultrasons et une pluralité de transducteurs ($108_1$, ..., $108_N$) de réception à ultrasons, et
- des moyens (112) de commande des transducteurs et de traitement conçus pour mettre en œuvre un procédé (200) d'acquisition de signaux selon l'une quelconque des revendications 1 à 8.

**Patentansprüche**

1. Verfahren (200) zur Erfassung von Signalen durch Ultraschalllotung, umfassend die folgenden Schritte:

   - Steuern (208) von L Sendewandlern ($108_1$, ..., $108_N$) für M aufeinanderfolgende Sendungen von Ultraschallwellen zu einer Zone von Interesse (102),
   - Steuern (208) von N Empfangswandlern ($108_1$, ..., $108_N$), um N Messsignale, die insbesondere Echos aufgrund von Reflexionen der betreffenden Sendung in der Zone von Interesse messen, gleichzeitig und während einer vorherbestimmten Dauer zu empfangen, für jede von M aufeinanderfolgenden Sendungen,
   - Erhalten (210) einer Matrix [MR(t)] von zeitlichen Ultraschallsignalen einer Größe NxM, wobei jeder Koeffizient $MR_{i,j}(t)$ dieser Matrix das Messsignal darstellt, das für den i-ten Empfangswandler aufgrund der j-ten Sendung empfangen wird,

   **dadurch gekennzeichnet, dass**:

   - eine anfängliche Matrix [MC'] der Größe LxM' zur Codierung von aufeinanderfolgenden Sendungen vorher für eine Anzahl M' von anfänglichen aufeinanderfolgenden Sendungen, die strikt größer als M ist, definiert wird (202), wobei jeder Koeffizient $MC'_{i,j}$ dieser Matrix einen Multiplikationsfaktor darstellt, der auf ein zeitliches gemeinsames Anregungssignal e(t) für seine Sendung durch den i-ten Sendewandler zum Zeitpunkt der j-ten Sendung angewendet wird,
   - eine Berechnung eines Schallfelds für jede von M' anfänglichen aufeinanderfolgenden Sendungen durchgeführt wird (204),
   - eine reduzierte Codierungsmatrix [MC] der Größe LxM aus der anfänglichen Codierungsmatrix [MC'] durch Eliminierung von M'-M Spalte(n), die M'-M anfänglichen eliminierten Sendungen entsprechen, auf der Basis eines Auswahlkriteriums, das auf M' Berechnungen von Schallfeldern angewendet wird, erhalten wird (206),
   - das Steuern (208) von L Sendewandlern für die M aufeinanderfolgenden Sendungen von Ultraschallwellen zu der Zone von Interesse mithilfe der reduzierten Codierungsmatrix [MC], die auf das zeitliche gemeinsame Anregungssignal e(t) angewendet wird, codiert wird.

2. Verfahren (200) zur Erfassung von Signalen nach Anspruch 1, wobei die Matrix [MR(t)] von zeitlichen Ultraschallsignalen zum Erhalt einer decodierten Matrix [MR'(t)] decodiert wird (214), die durch ein Matrixprodukt auf folgende Weise berechnet wird:

$$[MR'(t)] = [MR(t)] \cdot [MC]^T \cdot ([MC] \cdot [MC]^T)^{-1},$$

   wo "T" das Symbol einer Matrixverschiebung ist.

3. Verfahren (200) zur Erfassung von Signalen nach Anspruch 1 oder 2, wobei die Berechnung eines Schallfelds, die für jede von M' anfänglichen aufeinanderfolgenden Sendungen durchgeführt wird (204), die Berechnung eines vereinfachten Feldmodells $E_{m'}(f,\theta)$ umfasst, das für jede Spalte eines Index m' der anfänglichen Codierungsmatrix [MC'] auf folgende Weise definiert wird:

$$E_{m'}(f,\theta) = \sum_{l=1}^{L} MC'_{l,m'} \cdot s_l(f) \cdot D_l(f,\theta) e^{-jkld \sin \theta} \, ,$$

   wo:

   - f eine zeitliche Frequenz ist,
   - $\theta$ ein Winkel in Bezug auf eine Normale zu einer Hauptebene oder -achse von L Sendewandlern ($108_1$, ..., $108_N$) ist, wenn diese ausgerichtet sind,
   - $s_l(f)$ eine Übertragungsfunktion eines l-ten Sendewandlers ist,
   - $D_l(f,\theta)$ eine Richtfunktion des l-ten Sendewandlers in einem Sendemedium von Ultraschallwellen ist,
   - e die Exponentialfunktion ist,
   - j die komplexe Zahl ist, wie $j^2 = -1$,
   - k eine Wellenzahl ist, die durch k = 2nf/c definiert ist, wo c die Schnelligkeit von Ultraschallwellen in dem betreffenden Sendemedium ist, und

- d ein Schritt zwischen Elementen ist, d. h. eine gemeinsame Breite von Sendewandlern ($108_1$, ..., $108_N$), die zu einer Distanz zwischen zwei benachbarten Wandlern addiert wird.

4. Verfahren (200) zur Erfassung von Signalen nach Anspruch 3, wobei die Berechnung eines Schallfelds, die für jede von M' anfänglichen aufeinanderfolgenden Sendungen durchgeführt wird (204), außerdem die Berechnung eines integrierten Feldwerts $A_{m'}(\theta)$ aus jedem vereinfachten Feldmodell $E_{m'}(f,\theta)$ auf folgende Weise umfasst:

$$A_{m'}(\theta) = \left| \int_{f_{\min}}^{f_{\max}} E_{m'}(f,\theta)df \right| = \left| \sum_{l=1}^{L} MC'_{l,m'} \cdot \int_{f_{\min}}^{f_{\max}} s_l(f) \cdot D_l(f,\theta) e^{-jkld\sin\theta} \right|,$$

wo $f_{\min}$ und $f_{\max}$ eine minimale bzw. eine maximale Frequenz einer Bandbreite des zeitlichen gemeinsamen Anregungssignals e(t) sind.

5. Verfahren (200) zur Erfassung von Signalen nach einem der Ansprüche 1 bis 4, wobei das Auswahlkriterium, das auf M' Berechnungen von Schallfeldern angewendet wird, einen Amplitudenschwellwert umfasst, unter dem die Beiträge des Schallfelds als vernachlässigbar erachtet werden.

6. Verfahren (200) zur Erfassung von Signalen nach Anspruch 5, wobei jede Spalte der anfänglichen Codierungsmatrix [MC'], die eine anfängliche Sendung produziert, dessen Berechnung eines Schallfelds nicht einen höheren oder gleichen Wert zu dem Amplitudenschwellwert liefert, eliminiert wird (206).

7. Verfahren (200) zur Erfassung von Signalen nach einem der Ansprüche 1 bis 6, wobei das Auswahlkriterium, das auf M' Berechnungen von Schallfeldern angewendet wird, außerdem eine Winkelschwellwertbildung umfasst, die in einem Entfernen jedes Beitrags des Schallfelds außerhalb eines vorherbestimmten Winkelsektors besteht.

8. Verfahren (200) zur Erfassung von Signalen nach einem der Ansprüche 1 bis 7, wobei die anfängliche Codierungsmatrix [MC'] eine Hadamard-Matrix ist oder aus einer Hadamard-Matrix erhalten wird.

9. Computerprogramm (118), das von einem Kommunikationsnetzwerk herunterladbar ist und/oder auf einem computerlesbaren Träger aufgezeichnet ist und/oder durch einen Prozessor (114) ausführbar ist, **dadurch gekennzeichnet, dass** es Anweisungen umfasst, die bewirken, dass eine Ultraschallsondierungsvorrichtung (100) nach Anspruch 10 die Schritte eines Verfahrens (200) zur Erfassung von Signalen nach einem der Ansprüche 1 bis 8 ausführt.

10. Ultraschallsondierungsvorrichtung (100), umfassend:

- eine Sonde (104), umfassend mehrere Ultraschallsendewandler ($108_1$, ..., $108_N$) und mehrere Ultraschall-empfangswandler ($108_1$, ..., $108_N$) und
- Mittel (112) zur Steuerung von Wandlern und zur Verarbeitung, die zum Umsetzen eines Verfahrens (200) zur Erfassung von Signalen nach einem der Ansprüche 1 bis 8 vorgesehen sind.

**Claims**

1. A method (200) for acquiring signals via ultrasound probing, comprising the following steps:

- controlling (208) L emission transducers ($108_1$, ..., $108_N$) for M successive emissions of ultrasound waves towards a zone of interest (102),
- controlling (208) N reception transducers ($108_1$, ..., $108_N$) in such away as to receive simultaneously and over a predetermined time, for each of the M successive emissions, N measurement signals, measuring in particular echoes caused by reflections of the emission in question in the zone of interest,
- obtaining (210) a matrix [MR(t)] of ultrasound time signals having a size of NxM, each coefficient $MR_{i,j}(t)$ of this matrix representing the measurement signal received by the i-th reception transducer caused by the j-th emission,

**characterised in that**:

- an initial matrix [MC'], having a size of LxM', for encoding the successive emissions is previously defined (202) for a number M' of successive initial emissions strictly greater than M, each coefficient $MC'_{i,j}$ of this matrix representing a multiplication factor applied to a common excitation time signal e(t) for its emission by the i-th emission transducer at the time of the j-th emission,

- a calculation of acoustic field is carried out (204) for each of the M' successive initial emissions,

- a reduced encoding matrix [MC], having a size of LxM, is obtained (206) from the initial encoding matrix [MC'] by removal of M'-M column(s) corresponding to M'-M initial emissions eliminated on the basis of a selection criterion applied to the M' calculations of acoustic fields, and

- the control (208) of the L emission transducers for the M successive emissions of ultrasound waves towards the zone of interest is encoded using the reduced encoding matrix [MC] applied to the common excitation time signal e(t).

2. The method (200) for acquiring signals according to claim 1, wherein the matrix [MR(t)] of ultrasound time signals is decoded (214) in order to obtain a decoded matrix [MR'(t)] calculated via matrix product in the following manner:

$$[MR'(t)] = [MR(t)] \cdot [MC]^T \cdot ([MC] \cdot [MC]^T)^{-1} \,,$$

where "T" is the symbol of matrix transposition.

3. The method (200) for acquiring signals according to claim 1 or 2, wherein the calculation of acoustic field carried out (204) for each of the M' successive initial emissions comprises the calculation of a simplified field model $E_{m'}(f,\theta)$ defined for each column having the index m' of the initial encoding matrix [MC'] in the following manner:

$$E_{m'}(f,\theta) = \sum_{l=1}^{L} MC'_{l,m'} \cdot s_l(f) \cdot D_l(f,\theta) e^{-jkld\sin\theta} \,,$$

where:

- f is a temporal frequency,
- $\theta$ is an angle with respect to a normal to a main plane or axis of the L emission transducers ($108_1$, ..., $108_N$) when the latter are aligned,
- $s_l(f)$ is a transfer function of an l-th emission transducer,
- $D_l(f,\theta)$ is a directivity function of the l-th emission transducer in a medium of emission of the ultrasound waves,
- e is the exponential function,
- j is the complex number such that $j^2 = -1$,
- k is a wave number defined by $k = 2\pi f/c$ where c is the velocity of the ultrasound waves in the emission medium in question, and
- d is an inter-element step, that is to say a common width of the emission transducers ($108_1$, ..., $108_N$) added to a distance between two neighbouring transducers.

4. The method (200) for acquiring signals according to claim 3, wherein the calculation of acoustic field carried out (204) for each of the M' successive initial emissions further comprises the calculation of an integrated field value $A_{m'}(\theta)$ on the basis of each simplified field model $E_{m'}(f,\theta)$ in the following manner:

$$A_{m'}(\theta) = \left| \int_{f_{min}}^{f_{max}} E_{m'}(f,\theta) df \right| = \left| \sum_{l=1}^{L} MC'_{l,m'} \cdot \int_{f_{min}}^{f_{max}} s_l(f) \cdot D_l(f,\theta) e^{-jkld\sin\theta} \right| \,,$$

where $f_{min}$ and $f_{max}$ are respectively a minimum and maximum frequency of a bandwidth of the common excitation time signal e(t).

5. The method (200) for acquiring signals according to any one of claims 1 to 4, wherein the selection criterion applied to the M' calculations of acoustic fields comprises an amplitude threshold below which the contributions of the acoustic field are considered to be negligible.

6. The method (200) for acquiring signals according to claim 5, wherein each column of the initial encoding matrix [MC'] producing an initial emission, the calculation of acoustic field of which does not provide a value greater than or equal to the amplitude threshold, is eliminated (206).

7. The method (200) for acquiring signals according to any one of claims 1 to 6, wherein the selection criterion applied to the M' calculations of acoustic fields further comprises angular thresholding involving removing any contribution of the acoustic field outside of a predetermined angular sector.

8. The method (200) for acquiring signals according to any one of claims 1 to 7, wherein the initial encoding matrix [MC'] is a Hadamard matrix or obtained from a Hadamard matrix.

9. A computer program (118) that can be downloaded from a communication network and/or is recorded on a medium readable by computer and/or can be executed by a processor (114), **characterised in that** it comprises instructions that make an ultrasound probing device (100) according to claim 10 execute the steps of a method (200) for acquiring signals according to any one of claims 1 to 8.

10. An ultrasound probing device (100), comprising:

- a probe (104) comprising a plurality of ultrasound emission transducers ($108_1$, ..., $108_N$) and a plurality of ultrasound reception transducers ($108_1$, ..., $108_N$), and
- means (112) for controlling the transducers and for processing designed to implement a method (200) for acquiring signals according to any one of claims 1 to 8.

Figure 1

## Figure 2A

## Figure 2B

## Figure 2C

## Figure 3A

## Figure 3B

## Figure 3C

## Figure 4

## Figure 5

## Figure 6

## Figure 7

## Figure 8

## Figure 9A

## Figure 9B

## Figure 9C

## Figure 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20160065323 A1
- WO 2014009671 A1

**Littérature non-brevet citée dans la description**

- **KARAMAN et al.** Synthetic aperture imaging for small scale systems. *IEEE Transactions on Ultrasonics, Ferroelectrics, and Frequency Control,* Mai 1995, vol. 42 (3), 429-442
- **LOPEZ VILLAVERDE et al.** Ultrasonic imaging in highly attenuating materials with Walsh-Hadamard codes and the décomposition of the time reversai operator. *conférence IEEE International Ultrasonics Symposium,* 18 Septembre 2016
- **GRAN et al.** *Spatial encoding using a code division technique for fast ultrasound imaging*
- **FAN et al.** A comparison between ultrasonic array beamforming and super resolution imaging algorithms for non-destructive évaluation. *Ultrasonics,* Septembre 2014, vol. 54 (7), 1842-1850